(19) Europäisches Patentamt
European Patent Office
Office européen des brevets

(11) **EP 1 805 864 B1**

(12) **EUROPÄISCHE PATENTSCHRIFT**

(45) Veröffentlichungstag und Bekanntmachung des Hinweises auf die Patenterteilung:
**03.10.2018 Patentblatt 2018/40**

(21) Anmeldenummer: **05779170.9**

(22) Anmeldetag: **25.08.2005**

(51) Int Cl.:
*H02J 7/14* (2006.01)    *B60R 16/02* (2006.01)

(86) Internationale Anmeldenummer:
**PCT/EP2005/054173**

(87) Internationale Veröffentlichungsnummer:
**WO 2006/045654 (04.05.2006 Gazette 2006/18)**

(54) **VORRICHTUNG MIT MEHREREN PARALLEL GESCHALTETEN GENERATOREN ZUR SPANNUNGSVERSORGUNG**

POWER SUPPLY UNIT COMPRISING SEVERAL PARALLEL-CONNECTED GENERATORS

DISPOSITIF D'ALIMENTATION EN TENSION COMPRENANT PLUSIEURS GENERATEURS CONNECTES EN PARALLELE

(84) Benannte Vertragsstaaten:
**DE ES FR GB IT SE**

(30) Priorität: **23.10.2004 DE 102004051742**

(43) Veröffentlichungstag der Anmeldung:
**11.07.2007 Patentblatt 2007/28**

(73) Patentinhaber: **SEG Automotive Germany GmbH
70499 Stuttgart (DE)**

(72) Erfinder: **PEUSER, Thomas
71636 Ludwigsburg (DE)**

(74) Vertreter: **Steinbauer, Florian et al
Dehns Germany
Theresienstraße 6-8
80333 München (DE)**

(56) Entgegenhaltungen:
EP-A- 0 340 913    US-A- 5 254 936
US-A- 5 723 972    US-A- 6 044 923

**Beschreibung**

Die Erfindung betrifft eine Vorrichtung mit mehreren parallel geschalteten Generatoren zur Spannungsversorgung beispielsweise von Verbrauchern eines Kraftfahrzeug-Bordnetzes.

Stand der Technik

Es ist bereits bekannt, zu einer Spannungsversorgung von Verbrauchern Generatoren parallel zu schalten. Dabei werden typischerweise die Leistungsanschlüsse mehrerer für den Einzelbetrieb ausgelegter Serien-Generatoren ohne zusätzliche Steuerungsvorrichtungen oder Modifizierungen parallel geschaltet. Eine Lastsymmetrierung erfolgt bisher hauptsächlich durch den Innenwiderstand und durch den negativen Temperaturkoeffizienten des Reglers des jeweiligen Generators. Der genannte Temperaturkoeffizient wird dazu verwendet, bei den bekannten thermisch eng gekoppelten Batterie-Generator-Systemen eine ausreichende Batterieladung bei allen Betriebs- und Temperaturbedingungen sicherzustellen. Bei diesen bekannten Systemen kann durch den genannten Innenwiderstand und den negativen Temperaturkoeffizienten eine ausreichende Symmetrie in Bezug auf die Generatorenauslastung erzielt werden. Der Temperaturkoeffizient hat dabei folgenden Einfluss: Der stärker belastete Generator erwärmt sich mehr als der weniger stark belastete Generator. Durch den negativen Temperaturkoeffizienten sinkt die Ausgangsspannung des stärker belasteten Generators und damit auch seine Belastung.

Durch allgemeine Fortschritte in der Reglertechnik konnte in den letzten Jahren der Innenwiderstand der Regler der Generatoren signifikant gesenkt werden, zum Teil um mehr als 80%. Ein weiterer Trend in der Kraftfahrzeugtechnik führte zu einer Verlagerung der Batterie aus dem Motorraum in thermisch vom Generator entkoppelte Orte, beispielsweise in den Kofferraum des jeweiligen Fahrzeuges. Dadurch wurde eine von der Generatortemperatur abhängige Regelung der Ladespannung unsinnig. Es finden daher zunehmend Regler mit einem Temperaturkoeffizienten von Null Anwendung.

Diese Verringerung des Einflusses des Innenwiderstandes und des Temperaturkoeffizienten als Stellgrößen führt zu einer deutlich geringeren bis nicht mehr vorhandenen Symmetrierung von Generatoren bei deren Parallelschaltung.

Spannungsdifferenzen zwischen parallel geschalteten Generatoren können sich beispielsweise als Folge von Fertigungsstreuungen ergeben und führen zu einer unterschiedlichen Stromabgabe der Generatoren.

Im Falle einer unterschiedlichen Auslastung der Generatoren tritt als unerwünschter Effekt ein erhöhter Verschleiß des stärker belasteten Generators auf. Dies führt zu einer Verkürzung der Lebensdauer des Gesamtsystems, das mehrere parallel geschaltete Generatoren enthält.

Eine Einrichtung zur Spannungsversorgung in einem Kraftfahrzeug mit parallel geschalteten Generatoren gemäß dem Stand der Technik ist aus der DE 41 08 861 A1 bekannt. Bei dieser bekannten Einrichtung ist jedem der Generatoren ein Spannungsregler zugeordnet. Weiterhin weist die bekannte Einrichtung mindestens eine Batterie auf, deren einer Anschluss über einen Zündschalter mit dem Spannungsregler verbindbar ist. Ferner ist eine Ladekontrolleinrichtung vorgesehen, die mit dem Zündschalter und den Spannungsreglern in Verbindung steht und über ein Schaltmittel mit dem vorzugsweise auf Masse liegenden negativen Anschluss der Batterie verbindbar ist. Zwischen der Ladekontrolleinrichtung, den Spannungsreglern und dem genannten Schaltmittel liegt eine Schaltungsanordnung mit mehreren in einer Richtung leitenden und in einer Richtung sperrenden Bauelementen. Durch diese bekannte Einrichtung soll erreicht werden, dass durch den Einsatz zweier Generatoren eine hohe elektrische Leistung erzeugt werden kann und die beiden Generatoren bzw. Spannungsregler mit einer einzigen Anzeige, beispielsweise einer Ladekontrolllampe, auftretende Fehler in einem der beiden Generator-Spannungsregler-Systeme angezeigt werden können, wobei das andere Generator-Spannungsregler-System problemlos weiterarbeiten kann.

Aus der US-A-5 254 936 ist eine Vorrichtung zur Spannungsversorgung mit zwei parallel geschalteten Generatoren bekannt. Mit Hilfe einer Steuerung werden aus Auslastungssignalen und Messsignalen Ansteuersignale für die Spannungsregler der Generatoren geildet, die die Generatoren so regeln, dass sie gleichmäßig ausgelastet sind.

Vorteile der Erfindung

Eine Vorrichtung zur Spannungsversorgung mit den im Anspruch 1 angegebenen Merkmalen weist demgegenüber den Vorteil auf, dass eine ungleiche Lastverteilung bezüglich der parallel geschalteten Generatoren vermieden oder zumindest stark verringert wird. Dies geschieht durch eine zusätzliche Steuereinheit, die dazu vorgesehen ist, die Auslastung jedes der parallel geschalteten Generatoren zu ermitteln und geeignete Ansteuersignale zu erzeugen, aufgrund der die von den Generatoren bereitgestellten Ausgangsspannungen jeweils derart beeinflusst werden, dass die Lastverteilung ausgeglichen ist.

Bei der Steuereinheit kann es sich um eine externe, außerhalb der Generator-Regler-Systeme angeordnete Steuereinheit handeln. Eine derartige Ausführungsform erlaubt es, handelsübliche Generator-Regler-Systeme zu verwenden. Alternativ dazu kann die Funktion der Steuereinheit auch von einem der Generator-Regler übernommen werden. Bei dieser alternativen Ausführungsform ist keine zusätzliche externe Steuereinheit notwendig.

Weitere vorteilhafte Eigenschaften der Erfindung ergeben sich aus deren beispielhafter Erläuterung anhand der Zeichnung.

Zeichnung

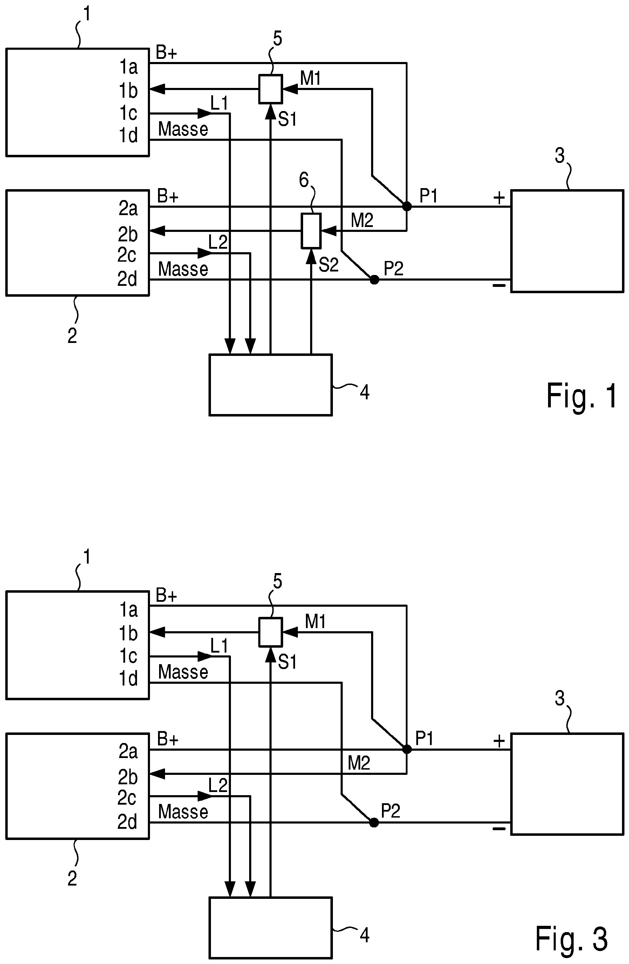

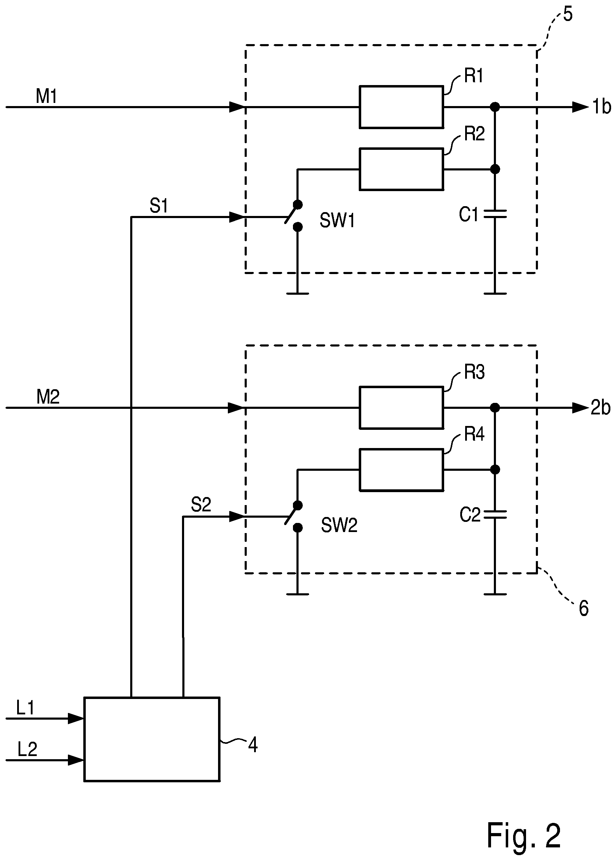

Die Figur 1 zeigt eine Blockdarstellung einer Parallelschaltung zweier Generatoren gemäß einem ersten Ausführungsbeispiel für die Erfindung. Die Figur 2 zeigt ein detailliertes Schaltbild zur Veranschaulichung der Blöcke 4, 5 und 6 von Figur 1. Die Figur 3 zeigt eine Blockdarstellung einer Parallelschaltung zweier Generatoren gemäß einem zweiten Ausführungsbeispiel für die Erfindung.

Beschreibung

Die Figur 1 zeigt eine Blockdarstellung einer Parallelschaltung zweier Generatoren gemäß einem ersten Ausführungsbeispiel für die Erfindung. Die dargestellten Generatoren 1 und 2, die jeweils einen integrierten Regler aufweisen, sind dazu vorgesehen, im Betrieb eines Kraftfahrzeugs die benötigte Energie für die Verbraucher des Kraftfahrzeug-Bordnetzes zur Verfügung zu stellen und eine Batterie 3 zu laden.

Zu diesem Zweck weist der Generator 1 einen Ausgang 1a für eine positive Versorgungsspannung B+ auf, der über einen Schaltungspunkt P1 mit dem Pluspol der Batterie 3 verbunden ist. Der Generator 2 weist einen Ausgang 2a für eine positive Versorgungsspannung B+ auf, der ebenfalls über den Schaltungspunkt P1 mit dem Pluspol der Batterie 3 verbunden ist.

Weiterhin ist der Generator 1 mit einem Masseanschluss 1d versehen, der über den Massepunkt P2 mit dem Minuspol der Batterie 3 verbunden ist. Der Generator 2 weist einen Masseanschluss 2d auf, der ebenfalls über den Massepunkt P2 mit dem Minuspol der Batterie 3 verbunden ist.

Ferner hat der Generator 1 einen Messsignaleingang 1b, welchem ein vom Schaltungspunkt P1 abgeleitetes Messsignal M1 über eine erste Überlagerungsschaltung 5 zugeführt wird. Der Überlagerungsschaltung 5 wird von einer Steuereinheit 4 ein Steuersignal S1 zugeführt, welches das genannte Messsignal M1 modifiziert.

Der Generator 2 ist mit einem Messsignaleingang 2b versehen, welchem ein ebenfalls vom Schaltungspunkt P1 abgeleitetes Messsignal M2 über eine zweite Überlagerungsschaltung 6 zugeführt wird. Der Überlagerungsschaltung 6 wird von der Steuereinheit 4 ein Steuersignal S2 zugeführt, welches das genannte Messsignal M2 modifiziert.

Weiterhin weist der Generator 1 einen Auslastungssignalausgang 1c auf, an welchem der Generator 1 ein Auslastungssignal L1 zur Verfügung stellt. Dieses Auslastungssignal L1 zeigt an, zu wie viel Prozent der Generator 1 ausgelastet ist. Das Auslastungssignal L1 wird der Steuereinheit 4 zugeführt.

Der Generator 2 ist mit einem Auslastungssignalausgang 2c versehen, an welchem der Generator 2 ein Auslastungssignal L2 zur Verfügung stellt. Dieses Auslastungssignal L2 zeigt an, zu wie viel Prozent der Generator 2 ausgelastet ist. Das Auslastungssignal L2 wird ebenfalls der Steuereinheit 4 zugeführt.

Die Steuereinheit 4 hat die Aufgabe, die Auslastungssignale L1 und L2 auszuwerten und in Abhängigkeit von dieser Auswertung die Steuersignale S1 und S2 zu erzeugen, die den Überlagerungsschaltungen 5 und 6 zugeführt werden. Durch die genannte Auswertung wird erkannt, ob die Auslastung des jeweiligen Generators zu hoch oder zu niedrig ist. Auf der Basis dieser Information werden die Messsignale M1 und M2 derart beeinflusst, dass die Ausgangsspannungen des jeweiligen Generators erniedrigt oder erhöht wird, so dass die Lastverteilung ausgeglichen ist. Auf diese Art wird ein dynamischer Abgleich der Ausgangsspannungen und auch der Ausgangsströme der Generatoren erreicht.

Die Erfindung geht davon aus, dass durch unterschiedliche Ausgangsspannungen der zueinander parallel geschalteten Generatoren eine unsymmetrische Lastverteilung zustande kommt. Bei zu niedriger Ausgangsspannung ist auch der Generatorstrom zu niedrig, bei zu hoher Ausgangsspannung ist der Generatorstrom zu groß, und zwar jeweils in Bezug auf den bzw. die anderen Generatoren. Durch eine Beeinflussung des dem Messsignaleingang des jeweiligen Generators zugeführten Messsignals lässt sich die Generatorspannung manipulieren. Treten am Messsignaleingang Spannungsänderungen auf, dann versucht der Regler des Generators dies zu kompensieren. Sinkt die Spannung am Messsignaleingang ab, sorgt der Regler für eine Anhebung der Ausgangsspannung des Generators. Steigt die Spannung am Messsignaleingang an, sorgt der Regler für eine Absenkung der Ausgangsspannung des Generators. Der jeweilige Generator stellt an seinem Auslastungssignalausgang eine Information über die momentane Auslastung des Generators zur Verfügung. Die Steuereinheit ermittelt durch eine Auswertung der Auslastungssignale aller parallel geschalteter Generatoren für jeden der Generatoren, ob dieser mehr oder weniger als einen gewünschten Anteil am Gesamtstrom erzeugt und stellt Steuersignale zur Verfügung, aufgrund derer die Generatorspannung und damit auch der Generatorstrom jedes Generators im Sinne einer symmetrischen Lastverteilung auf alle Generatoren verändert wird.

Nachfolgend wird die Auswertung der Auslastungssignale L1, L2 und die Erzeugung der Steuersignale S1, S2 näher erläutert.

Die Auslastungssignale L1 und L2 liegen in Form pulsweitenmodulierter Signale (PWM-Signale) vor. Die Steuereinheit ermittelt zuerst einen Mittelwert, vorzugsweise einen zeitlichen Mittelwert, jedes der Auslastungssignale. Dieser zeitliche Mittelwert repräsentiert die aktuelle Generatorauslastung, die nachfolgend mit DFMc bezeichnet wird. Dieser Wert ist bedingt durch den verwendeten Generator logisch invers: ein kleiner DFMc-Wert entspricht einer hohen Generatorauslastung.

Danach ermittelt die Steuereinheit 4 einen Mittelwert $\overline{\text{DFMc}}$ aus allen DFMc-Werten, vorzugsweise den arithmetischen Mittelwert.

Anschließend ermittelt die Steuereinheit 4 für jeden der Generatoren die Differenz zwischen dem Mittelwert $\overline{\text{DFMc}}$ und dem jeweils zugehörigen DFMc-Wert. Ist diese Differenz positiv, dann ist die Generatorauslastung zu hoch. Ist diese Differenz hingegen negativ, dann ist die Auslastung zu niedrig. Dies ist in der folgenden Beziehung dargestellt:

$$\overline{\text{DFMc}} - \text{DFMc} \quad \begin{array}{l} > 0 \rightarrow \text{DFMc} < \text{DFM}_{Soll} \Rightarrow \text{Auslastung zu hoch} \\[2ex] < 0 \rightarrow \text{DFMc} > \text{DFM}_{Soll} \Rightarrow \text{Auslastung zu niedrig.} \end{array}$$

In Abhängigkeit von der jeweils ermittelten Differenz stellt die Steuereinheit 4 der jeweiligen Überlagerungsschaltung ein Steuersignal zur Verfügung, welches beispielsweise zum jeweiligen Messsignal addiert wird. Das modifizierte Messsignal gelangt an den Messsignaleingang des jeweiligen Generators und wird vom Regler des Generators zur gewünschten Veränderung der vom Generator bereitgestellten positiven Versorgungsspannung B+ verwendet.

Vorzugsweise wird durch einen Parameter s die Steilheit der Regelkennlinie angepasst:

$$M_b = M + s(\overline{\text{DFMc}} - \text{DFMc}).$$

Dabei ist:

$M_b$ der dem Generator an seinem Messsignaleingang zur Verfügung stehende Spannungswert,

M der am Abgriffspunkt P1 abgegriffenen Spannungswert,

s die Steilheit der Regelkennlinie,

$\overline{\text{DFMc}}$ der arithmetische Mittelwert der aktuellen Generatorauslastungswerte und

DFMc der Wert für die aktuelle Generatorauslastung, der dem zeitlichen Mittelwert der Generatorauslastungssignale L1 bzw. L2 entspricht.

Da man im Falle einer Addition von positiven Spannungen zum Messsignal M1 bzw. M2 eine Betriebsspannung benötigen würde, die über der Spannung des Messsignals und damit auch meist über der Ausgangsspannung des Generators, also der höchsten im System verfügbaren Spannung, liegt, wird nur der negative Teil des Differenzsignals betrachtet, so dass das Messsignal entsprechend abgeschwächt wird. Damit wird die Spannung des Gesamtsystems auf die höchste Ausgangsspannung, d. h. auf die des am stärksten belasteten Generators, geregelt. Durch diese Art von Regelung wird eine zusätzliche Versorgungsspannung eingespart.

Eine detailliertere Darstellung der in der Figur 1 gezeigten Blöcke 4, 5 und 6 ist Gegenstand der Figur 2. Dort ist die Steuereinheit 4 in Form eines digitalen Reglers realisiert. Dieser liest die Auslastungssignale L1 und L2 digital ein, berechnet die Korrekturparameter und gibt anschließend die Regelwerte aus. Dabei ist nur am Ausgang eine Digital-/Analog-Wandlung erforderlich. Dies ist beispielsweise realisierbar durch das oben beschriebene Verfahren mit einer Spannungserzeugung am Ausgang oder durch die Verwendung eines Schalters, der über eine Pulsweitenmodulation das Messsignal gepulst auf Masse legt. Das danach tiefpassgefilterte Signal kann direkt auf den Messsignaleingang des Generators gelegt werden. Bei einer derartigen Lösung entfällt mit Ausnahme des Tiefpassfilters jeglicher analoge Schaltungsteil.

Die Figur 2 veranschaulicht eine derartige Implementierung. Dem dort dargestellten digitalen Regler 4 werden die Auslastungssignale L1 und L2 zugeführt. Der Regler ermittelt daraus die jeweiligen Korrekturparameter und gibt Regelwerte S1,S2 aus an einen Schalter SW1,SW2, dem ein Tiefpassfilter R2/C1,R4/C2 nachgeschaltet ist. Das Ausgangssignal des Tiefpassfilters wird dem über einen weiteren Widerstand R1,R3 geführten Messsignal M1,M2 überlagert. Das durch diese Überlagerung erhaltene Gesamtsignal wird dem Messsignaleingang 1b,2b des jeweiligen Generators zugeführt.

Zur Realisierung des digitalen Reglers gibt es verschiedene Möglichkeiten. Darunter fallen beispielsweise auch Lösungen, die einen Mikroprozessor, einen Mikrocontroller, ein FPGA oder ein ASIC verwenden.

Vorteilhafte Weiterbildungen bestehen darin, Veränderungen in den Kennlinien des Generator-Regler-Systems vorzunehmen, die Regelparameter durch andere Steuergeräte wie beispielsweise die Motorsteuerung zu modifizieren und weitere generatorspezifische Funktionen zu implementieren.

Die Figur 3 zeigt eine Blockdarstellung einer Parallelschaltung zweier Generatoren gemäß einem zweiten Ausführungsbeispiel für die Erfindung. Dieses unterscheidet sich von dem in der Figur 1 gezeigten Ausführungsbeispiel dadurch, dass nur dem Generator 1 eine Überlagerungsschaltung 5 vorgeschaltet ist. Bei dieser Ausführungsform kann das Messsignal in der Überlagerungsschaltung 5 sowohl erhöht als auch erniedrigt werden, so dass dem Messsignaleingang 1b in Abhängigkeit davon, ob die Ausgangsspannung B+ des Generators 1 zum Ausgleich der Lastverteilung erniedrigt oder erhöht werden muss, ein modifiziertes Messsignal zugeführt wird, das größer oder kleiner ist als das Messsignal M1.

Ist bei diesem Ausführungsbeispiel der Anteil des Generators 2 an der Lastverteilung zu groß, dann muss zum Erhalt einer gleichmäßigen Auslastung der Generatoren die Ausgangsspannung des Generators 1 erhöht werden. Dies geschieht durch eine geeignete Verringerung des Messsignals M1 in der Überlagerungsschaltung 5. Aufgrund des dem Messsignaleingang 1b zugeführten verringerten Messsignals sorgt der Regler des Generators 1 dafür, dass die Ausgangsspannung des Generators 1 erhöht wird. Dies erhöht den Anteil des Generators 1 an der Lastverteilung. Der Anteil des Generators 2 an der Lastverteilung wird dadurch automatisch reduziert.

Ist hingegen bei diesem Ausführungsbeispiel der Anteil des Generators 2 an der Lastverteilung zu klein, dann muss um Erhalt einer gleichmäßigen Auslastung der Generatoren die Ausgangsspannung des Generators 1 erniedrigt werden. Dies geschieht durch eine geeignete Erhöhung des Messsignals M1 in der Überlagerungsschaltung 5. Aufgrund des dem Messsignaleingang 1b zugeführten erhöhten Messsignals sorgt der Regler des Generators 1 dafür, dass die Ausgangsspannung des Generators 1 verringert wird. Dies verringert den Anteil des Generators 1 an der Lastverteilung. Der Anteil des Generators 2 an der Lastverteilung wird dadurch automatisch erhöht.

Da bei diesem Ausführungsbeispiel auch eine Erhöhung des Messsignals M1 möglich sein muss, ist eine zusätzliche Versorgungsspannung nötig, die entweder der Steuereinheit 4 oder der Überlagerungsschaltung 5 zur Verfügung gestellt wird.

Die Erfindung stellt nach alledem eine Vorrichtung mit mehreren parallel geschalteten Generatoren zur Verfügung, bei der auf zuverlässige und kostengünstige Weise eine gleichmäßige Auslastung der Generatoren erreicht wird. Sie ist insbesondere anwendbar zur Erzielung eines symmetrischen Betriebes bei Verwendung von modernen Generatoren, also Generatoren ohne Temperaturkoeffizienten und mit niedrigem Innenwiderstand. Sie kann aber auch im Zusammenhang mit älteren Generatoren verwendet werden, die einen negativen Temperaturkoeffizienten und einen hohen Innenwiderstand haben. Auch dort führt der Einsatz der Erfindung zu signifikanten Verbesserungen bezüglich der Symmetrie und damit zu einer Verlängerung der Systemlebensdauer.

Bezugszeichenliste:

| | |
|---|---|
| 1 | Erster Generator |
| 1a | Ausgang für positive Versorgungsspannung |
| 1b | Messsignaleingang |
| 1c | Auslastungssignalausgang |
| 1d | Masseanschluss |
| 2 | Zweiter Generator |
| 2a | Ausgang für positive Versorgungsspannung |
| 2b | Messsignaleingang |
| 2c | Auslastungssignalausgang |
| 2d | Masseanschluss |
| 3 | Batterie |
| 4 | Steuereinheit |
| 5 | Erste Überlagerungsschaltung |
| 6 | Zweite Überlagerungsschaltung |
| C1,C2 | Kondensatoren |
| L1,L2 | Auslastungssignale |

| | |
|---|---|
| M1,M2 | Messsignale |
| P1 | Abgriffspunkt für Messsignal |
| P2 | Massepunkt |
| R1,R2,R3,R4 | Ohmsche Widerstände |
| S1,S2 | Steuersignale |
| SW1,SW2 | Schalter |

**Patentansprüche**

1. Vorrichtung zur Spannungsversorgung, welche aufweist:

   - einen ersten Generator, der einen ersten Ausgang für eine positive Versorgungsspannung, einen ersten Messsignaleingang und einen ersten Auslastungssignalausgang aufweist,
   - einen parallel zum ersten Generator geschalteten zweiten Generator, der einen zweiten Ausgang für eine positive Versorgungsspannung, einen zweiten Messsignaleingang und einen zweiten Auslastungssignalausgang aufweist,
   - wobei die beiden Ausgänge niederohmig miteinander verbunden sind und auf Versorgungspannung (B+) liegen,
   - mit einer Steuereinheit (4), welcher vom ersten (1c) und vom zweiten (2c) Auslastungssignalausgang abgeleitete Signale zuführbar sind, und
   - eine mit einem der Messsignaleingänge (lb,2b) verbundene und von der Steuereinheit (4) angesteuerte Überlagerungsschaltung (5,6) aufweist, wobei
   - die Steuereinheit (4) zur Auswertung der vom ersten und vom zweiten Auslastungssignalausgang abgeleiteten Auslastungssignale (L1, L2) vorgesehen ist und Steuersignale (S1,S2) für die Überlagerungsschaltung (5,6) erzeugt, und
   - die Überlagerungsschaltung (5,6) dem Messsignaleingang (1b,2b) des zugehörigen Generators (1,2) Signale bereitstellt, mittels derer der Regler des zugehörigen Generators die die Ausgangsspannung des jeweiligen Generators individuell erhöht oder erniedrigt, so dass die Lastverteilung ausgeglichen ist,

   **dadurch gekennzeichnet, dass** die dem Messsignaleingang (1b,2b) des zugehörigen Generators (1,2) zugeführten Signale mit Hilfe der Steuersignale (S1,S2) modifizierte Messsignale (M1,M2) sind, wobei die Steuersignale (S1,S2) abhängig von der Differenz zwischen einem Mittelwert $\overline{DFMc}$ und dem jeweils zugehörigen DFMc-Wert für jeden der Generatoren gebildet werde, wobei $\overline{DFMc}$ der arithmetische Mittelwert der aktuellen Generatorauslastungswerte und DFMc der Wert für die aktuelle Generatorauslastung, der dem zeitlichen Mittelwert der Auslastungssignale (L1,L2) entspricht, ist.

2. Vorrichtung nach Anspruch 1, **dadurch gekennzeichnet, dass** sie

   - eine mit dem ersten Messsignaleingang (1b) verbundene und von der Steuereinheit (4) angesteuerte erste Überlagerungsschaltung (5) und
   - eine mit dem zweiten Messsignaleingang (2b) verbundene und von der Steuereinheit (4) angesteuerte zweite Überlagerungsschaltung (6) aufweist, wobei
   - die Steuereinheit (4) Ansteuersignale (S1,S2) für beide Überlagerungsschaltungen erzeugt.

3. Vorrichtung nach Anspruch 1 oder 2, **dadurch gekennzeichnet, dass** an den Auslastungssignalausgängen (1c,2c) jeweils ein pulsweitenmoduliertes Signal vorliegt und die Steuereinheit (4) zur Berechnung eines Mittelwertes jedes der Auslastungssignale vorgesehen ist.

4. Vorrichtung nach Anspruch 3, **dadurch gekennzeichnet, dass** die Steuereinheit (4) zur Berechnung eines Mittelwertes aus den Mittelwerten aller Auslastungssignale (L1, L2) vorgesehen ist.

5. Vorrichtung nach Anspruch 4, **dadurch gekennzeichnet, dass** die Steuereinheit (4) zur Berechnung des arithmetischen Mittelwertes aus den zeitlichen Mittelwerten aller Auslastungssignale (L1, L2) vorgesehen ist.

6. Vorrichtung nach Anspruch 5, **dadurch gekennzeichnet, dass** die Steuereinheit (4) für mindestens einen der Generatoren (1,2) die Differenz zwischen dem dem jeweiligen Generator zugehörigen zeitlichen Mittelwert und dem berechneten Mittelwert berechnet und das Ansteuersignal für die dem jeweiligen Generator zugehörige Überlagerungsschaltung (5,6) in Abhängigkeit von der berechneten Differenz zur Verfügung stellt.

7. Vorrichtung nach Anspruch 6, **dadurch gekennzeichnet, dass** mittels des Ansteuersignals (S1,S2) das dem weiteren Eingang der Überlagerungsschaltung (5,6) zugeführte Messsignal (M1, M2) verringert oder erhöht wird.

8. Vorrichtung nach einem der vorhergehenden Ansprüche, **dadurch gekennzeichnet, dass** die Steuereinheit ein digitaler Regler ist.

9. Vorrichtung nach einem der vorhergehenden Ansprüche, **dadurch gekennzeichnet, dass** die Steilheit der Reglerkennlinie durch einen Parameter s angepasst wird.

10. Vorrichtung nach Anspruch 9, **dadurch gekennzeichnet, dass** die Anpassung der Steilheit der Reglerkennlinie nach der Beziehung

$$M_b = M + s(\overline{DFMc} - DFMc)$$

erfolgt, wobei $M_C$ der dem Generator an seinem Messsignaleingang zur Verfügung stehende Spannungswert, M der am Abgriffspunkt P1 abgegriffenen Spannungswert und s die Steilheit der Regelkennlinie ist.

**Claims**

1. A device for power supply, comprising:

   - a first generator having a first output for a positive supply voltage, a first measurement signal input and a first workload signal output,
   - a second generator connected in parallel with the first generator and having a second output for a positive supply voltage, a second measurement signal input and a second workload signal output,
   - whereas the two outputs are connected to each other with low resistance and have a supply voltage (B+),
   - with a control unit (4), to which signals can be fed from the first (1c) and the second (2c) workload signal outputs, and
   - has an overlay circuit (5, 6) connected to one of the measuring signal inputs (1b, 2b) and controlled by the control unit (4), wherein
   - the control unit (4) is provided for evaluating the load signals (L1, L2) derived from the first and the second workload signal outputs and generates control signals (S1, S2) for the overlay circuit (5, 6), and
   - the overlay circuit (5, 6) provides signals to the measurement signal input (1b, 2b) of the associated generator (1, 2) by means of which the controller of the associated generator individually increases or decreases the output voltage of the respective generator, so that the load distribution is balanced.

   **characterised in that** the signals supplied to the measuring signal input (1b, 2b) of the associated generator (1, 2) are measuring signals (M1, M2) modified with the aid of the control signals (S1, S2), the control signals (S1, S2) being formed dependent on the difference between an average value $\overline{DFMc}$ and the respectively associated DFMc value is formed for each of the generators, $\overline{DFMc}$ being the arithmetic mean value of the current generator workload values and DFMc being the value for the current generator workload corresponding to the time average of the workload signals (L1, L2).

2. A device according to claim 1, **characterised in that** it has a first overlay circuit (5) connected to the first measuring signal input (1b) and controlled by the control unit (4) and

   - has a second overlay circuit (6) connected to the second measuring signal input (2b) and controlled by the control unit (4), wherein
   - the control unit (4) generates control signals (S1, S2) for both overlay circuits.

3. A device according to claim 1 or 2, **characterised in that** a pulse width modulated signal is provided at each of the workload signal outputs (1c, 2c) and the control unit (4) is provided for calculating an average value of each of the workload signals.

4. A device according to claim 3, **characterised in that** the control unit (4) is provided for calculating an average value from the average values of all workload signals (L1, L2).

5. A device according to claim 4, **characterised in that** the control unit (4) is provided for calculating the arithmetic value from the chronological average values of all workload signals (L1, L2).

6. A device according to claim 5, **characterised in that** the control unit (4) calculates for at least one of the generators (1, 2) the difference between the time average associated with the respective generator and the calculated mean value, and provides the control signal to the overlay circuit (5, 6) associated to the respective generator depending on the difference calculated.

7. A device according to claim 6, **characterised in that** by means of the control signal (S1, S2) the measuring signal (M1, M2) supplied to the additional input of the overlay circuit (5, 6) is reduced or increased.

8. A device according to any one of the preceding claims, **characterised in that** the control unit is a digital controller.

9. A device according to any one of the preceding claims, **characterised in that** the slope of the regulator characteristic is adjusted by a parameter s.

10. A device according to any one of the preceding claims, **characterised in that** the slope of the regulator characteristic respects the equation

$$Mb = M + s(\overline{DFMc} - DFMc)$$

where Mc is the voltage value available to the generator at its measurement signal input, M is the voltage value tapped at the tap point PI, and s is the slope of the control characteristic.

**Revendications**

1. Dispositif d'alimentation en tension comportant :

   - un premier générateur comportant une première sortie pour une tension d'alimentation positive, une première entrée de signal de mesure et une première sortie de signal d'utilisation de capacité,
   - un second générateur raccordé en parallèle au premier générateur et comportant une seconde sortie pour une tension d'alimentation positive, une seconde entrée de signal de mesure et une seconde sortie de signal d'utilisation de capacité,
   - dans lequel les deux sorties sont reliées l'une à l'autre avec une faible valeur ohmique et sont à la tension d'alimentation (B+),
   - une unité de commande (4) qui peut être alimentée en signaux obtenus à partir des première (1c) et seconde (2c) sorties de signal d'utilisation de capacité, et
   - un circuit de superposition (5, 6) piloté par l'unité de commande (4) et relié à l'une des entrées de signal de mesure (1b, 2b), dans lequel
   - l'unité de commande (4) est destinée à analyser les signaux d'utilisation de capacité (L1, L2) obtenus à partir de la première et de la seconde sortie de signal d'utilisation de capacité et génère des signaux de commande (S1, S2) pour le circuit de superposition (5, 6), et
   - le circuit de superposition (5, 6) fournit des signaux à l'entrée de signal de mesure (1b, 2b) du générateur (1, 2) associé, au moyen desquels le régulateur du générateur associé augmente ou abaisse individuellement la tension de sortie du générateur respectif, de sorte que la répartition de la charge est compensée,

   **caractérisé en ce que** les signaux fournis à l'entrée de signal de mesure (1b, 2b) du générateur (1, 2) associé sont des signaux de mesure modifiés (M1, M2) à l'aide des signaux de commande (S1, S2), dans lequel les signaux de commande (S1, S2) sont formés indépendamment de la différence entre une valeur moyenne $\overline{DFMc}$ et la valeur DFMc respectivement associée à chacun des générateurs, dans lequel $\overline{DFMc}$ représente la valeur moyenne arithmétique des valeurs actuelles d'utilisation de capacité de générateur et DFMc représente la valeur pour la décharge actuelle de générateur qui correspond à la valeur moyenne dans le temps des signaux d'utilisation de capacité (L1, L2).

2. Dispositif selon la revendication 1, **caractérisé en ce qu'**il comporte :

- un premier circuit de superposition (5) piloté par l'unité de commande (4) et relié à la première entrée de signal de mesure (1b) et
- un second circuit de superposition (6) piloté par l'unité de commande (4) et relié à la seconde entrée de signal de mesure (2b), dans lequel
- l'unité de commande (4) génère des signaux de commande (S1, S2) pour les deux circuits de superposition.

3. Dispositif selon la revendication 1 ou 2, **caractérisé en ce qu'**un signal modulé en largeur d'impulsion est respectivement présent sur les sorties de signal d'utilisation de capacité (1c, 2c) et l'unité de commande (4) est destinée à calculer une valeur moyenne de chacun des signaux d'utilisation de capacité.

4. Dispositif selon la revendication 3, **caractérisé en ce que** l'unité de commande (4) est destinée à calculer une valeur moyenne à partir des valeurs moyennes de tous les signaux d'utilisation de capacité (L1, L2).

5. Dispositif selon la revendication 4, **caractérisé en ce que** l'unité de commande (4) est destinée à calculer la valeur moyenne arithmétique à partir des valeurs moyennes dans le temps de tous les signaux d'utilisation de capacité (L1, L2).

6. Dispositif selon la revendication 5, **caractérisé en ce que** l'unité de commande (4) calcule, pour au moins un des générateurs (1, 2), la différence entre la valeur moyenne dans le temps associée au générateur respectif et la valeur moyenne calculée, et le signal de commande est fourni au circuit de superposition (5, 6) associé au générateur respectif en fonction de la différence calculée.

7. Dispositif selon la revendication 6, **caractérisé en ce qu'**au moyen du signal de commande (S1, S2), le signal de mesure (M1, M2) fourni à l'entrée supplémentaire du circuit de superposition (5, 6) est réduit ou augmenté.

8. Dispositif selon l'une des revendications précédentes, caractérisé en que l'unité de commande est un régulateur numérique.

9. Dispositif selon l'une des revendications précédentes, **caractérisé en ce que** la pente de la caractéristique de régulation est adaptée au moyen d'un paramètre.

10. Dispositif selon la revendication 9, **caractérisé en ce que** l'adaptation de la pente de la caractéristique de régulation est effectuée d'après la relation :

$$M_b = M + s\,(\overline{DFMc} - DFMc)$$

dans laquelle $M_c$ est la valeur de tension fournie au générateur au niveau de son entrée de signal de mesure, M est la valeur de tension prélevée au point de prélèvement P1 et s est la pente de la caractéristique de régulation.

EP 1 805 864 B1

Fig. 1

Fig. 3

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4108861 A1
- US 5254936 A